# EUROPEAN PATENT SPECIFICATION

(11) **EP 0 431 931 B1**
(45) Date of publication and mention of the grant of the patent: **13.03.1996**
(21) Application number: 90313237.1
(22) Date of filing: 06.12.1990
(51) Int. Cl.: G03B 9/00

(54) **Plate member for use as material of light shielding blades**
Plattenglied zum Gebrauch als Lichtabschirmblattmaterial
Plaque utilisable comme matériau de lame de protection contre la lumière

(30) Priority: 07.12.1989 JP 318244/89; 18.09.1990 JP 247917/90
(43) Date of publication of application: 12.06.1991
(73) Proprietor: NIKON CORPORATION, Tokyo (JP)
(72) Inventor: Matsubara, Takashi, Setagaya-ku, Tokyo (JP)
(74) Representative: Burke, Steven David

(56) References cited:
- EP-A- 0 394 996
- DE-A- 3 919 770
- DE-U- 8 633 679

## Description

### BACKGROUND OF THE INVENTION

### Field of the Invention

The present invention relates to a plate member for use as a material for light shielding blade members which are required to move at high velocity, such as a focal plane shutter blades or a lens shutter blades of a camera.

### Related Background Art

In general, it is preferred that a light-shielding blade is operated at high velocity with a small force without requiring the flexural rigidity of the blade to be decreased. A demand therefore exists for a light-shielding blade having a low weight but yet possessing high strength and rigidity.

To cope with such a demand, a plate member for use as a material for light shielding blades has been proposed which has a laminate construction including a reinforced-resin intermediate layer composed of uni-directionally arrayed continuous carbon fibers and a resin matrix and reinforced-resin surface layers composed of continuous carbon fibers unidirectionally arrayed in a direction substantially orthogonal to the direction of the fibers in the intermediate layer and a matrix resin, the light-shielding member having a total thickness of 60 to 120 µ. This type of plate member is disclosed, for example in Japanese Patent Application Laid-Open No. 59-61827, USP 4,482,231, Japanese Patent Application Laid-Open No. 62-199439, Japanese Patent Application Laid-Open No. 63-17435, and DE-U-8633679.

Obviously, the layers forming this plate member are arranged in plane symmetry in the thicknesswise direction. In addition, each of the intermediate and surface layers may be a laminate layer composed of a plurality of thin reinforced resin sheets. In general, 20 to 50 blades are formed by cutting or punching from this plate member, such that the longitudinal direction of the carbon fibers of the intermediate layer is substantially orthogonal to the longitudinal axis of the light shielding blade. The light-shielding blades thus formed are light-weight and superior in hardness and rigidity, and are actually used in cameras having a high shutter release speed of 1/8000 seconds.

The light-shielding blade thus formed suffers from disadvantages due to its small thickness which usually ranges between 60 and 120 µ. The first problem is that the plate member has the blank of the light-shielding blade generally exhibits a large thickness variation. The second problem is that the plate member is inferior in flatness, i.e., that the plate member is warped or distorted. The third problem is that the light-shielding blade formed by punching or cutting also is inferior in flatness.

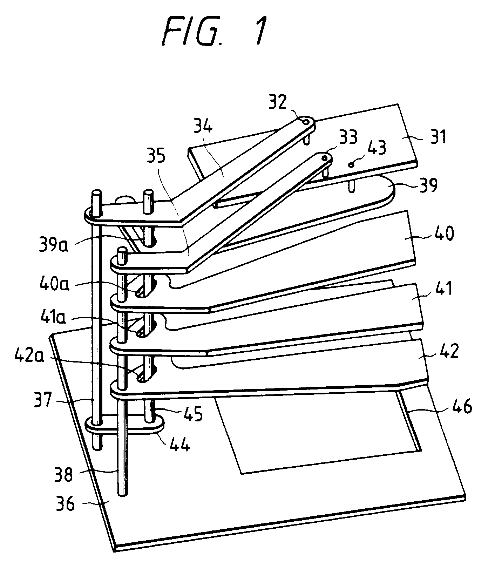

Fig. 1 is an illustration of a vertical-running type focal plane shutter in assembled state, wherein the light-shielding blades formed by the above-described process are used as a first blade 31, a second blade 39, a third blade 40, a fourth blade 41 and a fifth blade 42.

Arms 34 and 35 are rotatably connected to pins 32, 33 provided on the first blade 31. The arms 34, 35 are rotatable about shafts 37, 38 provided on a shutter base plate 36. The pins 32, 33 and the shafts 37, 38 are arranged in a parallelepiped quadrilateral form, so that the first blade 31 translationally moves in the vertical direction of the aperture 46 in accordance with rotation of the arms 32, 33. However, the second blade 39, the third blade 40, the fourth blade 41 and the fifth blade 42 are moved in a manner different from that of movement of the first blade 31. More specifically, the pin 43 provided on the first blade 31 is rotatably connected to the second blade 39, while a pin 45 provided on an arm 44 rotatably supported by a shaft 37 engages with a cam groove 39a formed in the base portion of the second blade 39. Consequently, the motion of the second blade 39 is determined by the movement of the pin 45 and the contour of the cam groove 39a, through the action of the pin 43. The third blade 40 is rotatably carried by the shaft 39 and a cam groove 40a engaging with the pin 45 is provided on the base portion thereof. The fourth and fifth blades 41 and 42 are also rotatably carried by the shaft 38 and are provided with cam grooves 41a and 42a for engagement with the pin 45. The pin 45 also is rotatably connected to an arm 34 which is rotatably supported by the shaft 37, so as to rotate together with the arm 44 which rotates about the shaft 37. The cam grooves 39a, 40a, 41a, and 42a are arranged such that the blades are developed to cover the aperture 46 when the first blade 31 is positioned above the aperture 46 as viewed in the Figure, whereas, when the first blade 31 is retracted to the underside of the aperture 46, all the blades are superposed. In this arrangement, the third to fifth blades 40 to 42 rotate about the center of the shaft 38 as if theyform a fan or a sector. In general, a focal plane shutter device of the kind described includes a pair of the described group of blades. One of the blade groups serve as shutter opening blades, while the other serve as shutter closing blades.

Hitherto, focal plane shutter devices of the kind described, employing blades made from conventional plate members, tend to suffer from problems in regard to connection between the driving system and the blades due to inferior flatness of the plate member and due to local reduction in the strength caused by presence of micro-cracks and cavities in the plate material. In addition, the appearance of the blades and applicability of DL (dry lubricant) are also impaired.

The document DE-U-8633679 also discloses an alternative arrangement in which the intermediate layer includes randomly-oriented short fibers.

The present inventors made an intense study to clarify the causes of these problems and found that both the surface layers and intermediate layers of the conventional plate member have resin contents as small as 30 to 45 wt% and the small resin content in the intermediate layer causes generation of defects such as micro-cracks and cavities, as well as inferior flatness.

According to one aspect of the present invention, there is provided a light-shielding blade formed of a laminate of at least three carbon fiber reinforced resin layers, comprising: an intermediate layer made of a material composed of a matrix resin enveloping uni-directionally oriented continuous carbon fibers, and surface layers on both sides of said intermediate layer, each one of said surface layers being made of a material composed of a matrix resin enveloping uni-directionally oriented continuous carbon fibers, the fibers of said surface layers being oriented in a direction substantially orthogonal to the direction of said carbon fibers in said intermediate layer and the resin content of said surface layers being in the range of 30 to 45 wt%, characterised in that the resin content of said intermediate layer is in the range of 50 to 60 wt%.

According to another aspect of the present invention there is provided a light-shielding blade formed of a laminate of at least three carbon fiber reinforced resin layers, comprising: an intermediate layer made of a material composed of a matrix resin enveloping short carbon fibers, and surface layers on both sides of said intermediate layer, each one of said surface layers being made of a material composed of a matrix resin enveloping uni-directionally oriented continuous carbon fibers, the resin content of said surface layers being in the range of 30 to 45 wt%, characterised in that said short carbon fibers of said intermediate layer are uni-directionally oriented in a direction substantially orthogonal to the direction of said carbon fibers in said surface layers, and the resin content of said intermediate layer is in the range of 60 to 75 wt%.

As a result of a further study, the present inventors have found that the above-described problems of the prior art can be overcome by increasing the resin content of the intermediate layer to 50 to 60 wt% when the resin is used in combination with continuous fibers and 60 to 75 wt% when used together with short fibers, without increasing the resin content of the surface layers. Thus, the inventors have found also that the desired light-shielding blades can be obtained even if short fibers are used in place of conventional continuous fibers in the intermediate layer, provided that the short fibers are uni-directionally oriented.

Preferably, a prepreg sheet formed by impregnating carbon fibers with a precursor of the matrix resin is used as the green material.

The prepreg sheet is formed by impregnating reinforcement fibers with a thermosetting resin liquid, e.g., uncured liquid of an epoxy resin or unsaturated polyester, which is a precursor of the matrix resin, and transforming the resin liquid to B stage in which the resin has been cured to extinguish fluidity but is still curable finally by application of heat.

The plate member of the present invention can be formed by preparing a plurality of prepreg sheets each being about 10 to 60 µ thick, sandwiching at least one prepreg sheet as an intermediate layer between at least two prepreg sheets as the surface layers, such that the the longitudinal axes of the carbon fibers in the intermediate layer and those of the carbon fibers in the surface layers are orthogonal or substantially orthogonal to each other, and such that these layers are arranged in a plane-symmetry in the thicknesswise direction, and applying heat and pressure to the sandwich structure so as to cure the resin liquid.

The intermediate layer and each of the surface layers may be formed from a plurality of prepreg sheets stacked and laminated with their carbon fibers oriented in the same direction or substantially at right angles. For instance, the plate member may have one upper surface layer made from an angle prepreg sheet, an intermediate layer composed of two prepreg sheet superposed one on the other with their carbon fibers oriented in the same direction, and one lower surface layer composed of a single prepreg sheet, the upper and lower surface layers having their carbon fibers oriented in the direction orthogonal to the carbon fibers of the prepreg sheets forming the intermediate layer.

The carbon fibers used in the intermediate layer may be short carbon fibers with lengths preferably ranging between 1 and 30 mm and more preferably between 5 and 15 mm.

Both the continuous and short carbon fibers preferably have diameters of 3 to 10 µ.

In order to obtain sufficiently high light-shielding effect and surface lubricating power, carbon black may be beforehand added to the prepreg composition as desired, at a ratio of 5 to 15 wt% to the resin liquid (solid content 100 wt parts). Preferably, the carbon black has a mean particle size of 0.07 µ or below. The addition of the carbon black may be done only to the prepreg sheets of the surface layers or only to the prepreg sheet or sheets of the intermediate layer. Different characteristics are obtainable by selective addition of the carbon black to the prepreg layers.

The plate material of the invention can be obtained by processing the laminate of the prepreg sheets. A black coating (dry lubricant application) may be effected in this step for the purposes such as improvement in the light-shileding effect, reduction in the surface reflectivity, improvement in the appearance and improvement in the surface lubricating power. The thickness of the coating film is preferably 0.1 to 10 µ. In order to eliminate any risk of warping or distortion of the plate member, the thickness of the coating layer is preferably determined to range between 0.1 to 3 µm.

By cutting or punching the thus obtained plate member into light-shielding blades of a predetermined configuration, it is possible to produce 20 to 50 pieces of light-shielding blades at a time. The cutting or punching is conducted that the carbon fibers in the intermediate layer are oriented orthogonally to the longitudinal axis of the blade, i.e., such that the longitudinal axes of these fibers are substantially orthogonal to the longitudinal axes of the blades. The black coating may be applied on each piece of the light shielding blade, rather than during or after heat-pressing.

### BRIEF DESCRIPTION OF THE DRAWINGS

Fig. 1 is an illustration of a vertical-running type focal plane shutter in assembled state;
Fig. 2 is a schematic vertical sectional view of Example 2 of a plate member for use as a material for light-shielding blades according to an embodiment of the present invention; and
Fig. 3 is a schematic vertical sectional view of Example 3 of a plate member for use as a material for light-shielding blades according to an embodiment of the present invention.

### DESCRIPTION OF THE PREFERRED EMBODIMENTS

The invention will be fully described through its preferred embodiments. It is, however, to be understood that the described embodiments are only illustrative and are not intended for limiting the scope of the invention.

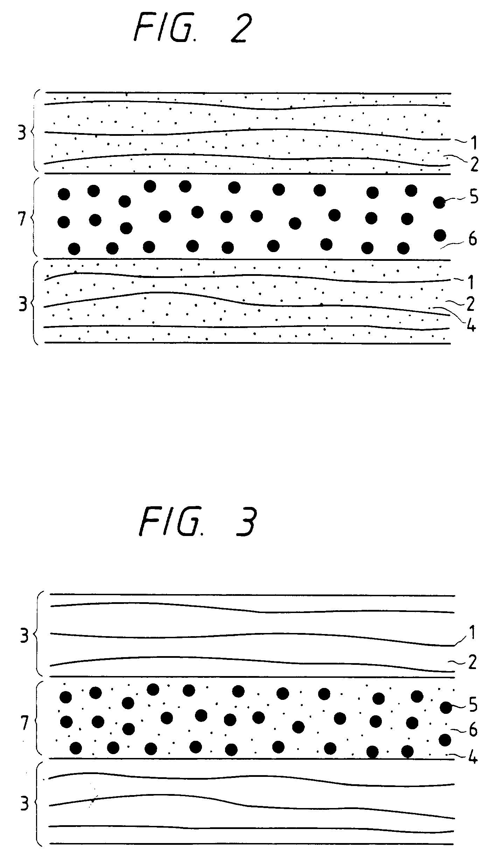

Referring to Figs. 2 and 3, numeral 1 denotes continuous carbon fibers, 2 denotes a matrix resin, 3 denotes surface layers, 4 denotes carbon black, 5 denotes short carbon fibers, 6 denotes a matrix resin and 7 denotes an intermediate layer.

### Example 1

(1) Prepreg sheets A of 20 to 40 µ thick are prepared by enveloping, in an epoxy resin as a matrix resin, uni-directionally oriented continuous carbon fibers of 6 to 7 µ in diameter. The resin content of the prepreg sheet A was 35 to 45 wt%.

(2) Prepreg sheets B of 10 to 50 µ thick were prepared by enveloping, in an epoxy resin as a matrix resin, uni-directionally oriented short carbon fibers of 6 to 7 µ in diameter and 1 to 30 mm in length. The resin content of the prepreg sheet B was 60 to 75 wt%. This sheet B could be produced by centrifugal lifting method which makes use of a paper making process.

(3) A multiplicity of plate members of 60 to 120 µ thickness were produced by using prepreg sheet. More specifically, each plate member was formed by interposing one prepreg sheet B forming an intermediate layer between a pair of prepreg sheets A forming surface layers, in a plane-symmetrical form such that the direction of the longitudinal axes of the sheet B is orthogonal to the direction of the longitudinal axes of the carbon fibers in the sheets A. Thus, the directions of the longitudinal axes of the carbon fibers of both sheets A were the same. The thus formed sandwich structure was then subjected to a pressure of 5 to 15 kg/cm at 130°C and was left for 1 to 2 hours so that the epoxy resin was cured. Subsequently, the structure was gradually cooled down to the room temperature, whereby the plate member was formed.

The plate members thus formed were examined for any thickness variation and warp, and the ratio of the number of the plate members having acceptable level of flatness to the total number of the plate members was determined. This ratio will be referred to as "first yield", hereinafter. (4) 20 to 50 pieces of light-shielding blades for a focal plane shutter device were produced by a press punching from one of the plate members having acceptable levels of flatness. The punching was conducted such that the direction of longitudinal axes of the carbon fibers are orthogonal to the longitudinal axis of the light-shielding blade.

The thus obtained light-shielding blades were examined for thickness variation and warp, and the ratio of the number of the light-shielding blades having acceptable levels of flatness to the total number of the blades was determined. This ratio will be referred to as "second yield".

(5) Black coating film with dry lubricant, 4 µ in thickness, was formed on each side of each of the light-shielding plates having acceptable levels of flatness. Formation of the black coating film on the blade member often causes internal potential strain to be developed so as to warp the blade. Therefore, the light-shielding blades with black coating film were examined for any warp and the ratio of the number of the light-shielding blades with acceptable levels of flatness to the total number of the blades with black coating film was determined. This ratio will be referred to as "third yield", hereinafter. The first to third yields thus determined are shown in Table 1.

### Comparison Example 1

Three prepreg sheets A used in Example 1 was superposed such that the direction of the longitudinal axes of the carbon fibers in the intermediate sheet is orthogonal to the directions of longitudinal axes of the carbon fibers of the two outer sheets A. Using this structure, plate members, light-shielding blades and black-coated light-shielding blades were produced in the same manner as Example 1, and the first to third yields of were determined in the same procedure as Example 1. The results are shown in Table 1.

**Table 1**

| | Example 1 | Comparison Example 1 |
|---|---|---|
| First yield (%) | Approx. 100% | Approx. 90% |
| Second yield (%) | Approx. 80 to 100% | Approx. 50 to 70% |
| Third yield (%) | Approx. 90% | Approx. 90% |
| Total | Approx. 72 to 90% | Approx. 41 to 57% |

### Example 2

Prepreg sheets A′ were prepared to have the same construction as the prepreg sheets A used in Example 1 except that 10 wt% of carbon black, having a mean particle size of 0.01 µ or less, were added per 100 weight parts. Using these prepreg sheets A′, plate members, light-shielding blades and black-coated light-shielding blades were produced in the same manner as Example 1.

### Example 3

Prepreg sheets B′ were prepared to have the same construction as the prepreg sheets B used in Example 1 except that 10 wt% of carbon black, having a mean particle size of 0.01 µ or less, were added per 100 weight parts. Using these prepreg sheets B′, plate members, light-shielding blades and black-coated light-shielding blades were produced in the same manner as Example 1.

### Example 4

Plate members were produced by sandwiching two prepreg sheets B of Example 1 between a pair of prepreg sheets A of Example 2, such that the direction of the longitudinal axes of the carbon fibers in the intermediate sheets B, B is orthogonal to the direction of the longitudinal axes of the carbon fibers in the outer surface sheets A, A. Thus, the sandwich structure was formed by four layers of sheet arranged in plane-symmetry in the thicknesswise direction. Thus, the plate member had an intermediate layer composed of a pair of sheets B. Using the thus obtained plate members, light-shielding blades and black-coated light-shielding blades were produced in the same manner as Example 1.

### Example 5

Prepreg sheets B" of 10 to 50 µ thick were prepared by enveloping uni-directionally oriented continuous carbon fibers of a mean diameter of 6 to 7 µ in an epoxy resin as a matrix resin. The resin content was 50 to 60 wt%. Plate members, light-shielding blades and black-coated light-shielding blades were produced in the same manner as Example 1 except that the prepreg sheets B" were used in place of the prepreg sheets B.

The black-coated light-shielding blades of Examples 1 to 5 were subjected to a durability test on a high-speed camera shutters. The high-speed shutters produced from these black-coated light-shielding blades could withstand more than 400,000 shutter releasing cycles, thus proving satisfactory high-speed stability and high-speed running characteristics. The intermediate layer can be formed of three or more prepreg sheets B. In such a case, it is not always necessary that all these prepreg sheets constituting the intermediate layer have an equal resin content, although it is essential that these three or more prepreg sheets are arranged in plane-symmetry. When a plurality of prepreg sheets are used to form the intermediate layer, these prepreg sheets maybe assembled such that the directions of orientation of carbon fibers in these sheets are orthogonal to each other.

As has been described, according to the present invention, it is possible to obtain a plate member for use as a material of light-shielding blades with a high level of flatness at a high yield, i.e., with high values of first to third yields. Consequently, the cost of production of light-shielding blades can be reduced remarkably despite the use of prepreg sheets which are generally expensive due to use of carbon fibers.

In addition, since a high level of flatness is obtainable despite the reduced thickness of the plate member, the weight of the light-shielding blade is reduced, which greatly contributes to realization of super-high-speed shutter blades which operate at a very high speed of 1/12000 second or higher.

## Claims

1. A light-shielding blade formed of a laminate of at least three carbon fiber reinforced resin layers, comprising:
an intermediate layer (7) made of a material composed of a matrix resin (6) enveloping uni-directionally oriented continuous carbon fibers (5), and
surface layers (3) on both sides of said intermediate layer (7), each one of said surface layers being made of a material composed of a matrix resin (2) enveloping uni-directionally oriented continuous carbon fibers (1), the fibers (1) of said surface layers (3) being oriented in a direction substantially orthogonal to the direction of said carbon fibers (5) in said intermediate layer (7) and the resin content of said surface layers (3) being in the range of 30 to 45 wt%, characterised in that
the resin content of said intermediate layer (7) is in the range of 50 to 60 wt%.

2. A light-shielding blade formed of a laminate of at least three carbon fiber reinforced resin layers, comprising:
an intermediate layer (7) made of a material composed of a matrix resin (6) enveloping short carbon fibers (5), and
surface layers (3) on both sides of said intermediate layer (7), each one of said surface layers (3) being made of a material composed of a matrix resin (2) enveloping uni-directionally oriented continuous carbon fibers (1), the resin content of said surface layers (3) being in the range of 30 to 45 wt%, characterised in that
said short carbon fibers (5) of said intermediate layer (7) are uni-directionally oriented in a direction substantially orthogonal to the direction of said carbon fibers (5) in said surface layers (3), and the resin content of said intermediate layer (7) is in the range of 60 to 75 wt%.

3. A shutter blade (31; 39; 40; 41; 42) formed from a light-shielding blade according to any one of the preceding claims.

## Patentansprüche

1. Lichtschutzlamelle, die aus einem Laminat aus mindestens drei durch Kohlenstoffasern verstärkte Harzschichten gebildet ist, umfassend:
eine Zwischenschicht (7) aus einem Material, welches sich zusammensetzt aus einem Grundmaterialharz (6), welches unidirektional orientierte durchgehende Kohlenstoffasern (5) einhüllt, und
Oberflächenschichten (3) auf beiden Seiten der Zwischenschicht (7), wobei jede der Oberflächenschichten aus einem Material gefertigt ist, welches sich aus einem Grundmaterialharz (2) zusammensetzt, welches undirektional orientierte durchgehende Kohlenstoffasern (1) umhüllt, wobei die Fasern (1) der Oberflächenschichten (3) in einer Richtung orientiert sind, die im wesentlichen orthogonal zu der Richtung der Kohlenstoffasern (5) der Zwischenschicht (7) verläuft, und der Harzanteil der Oberflächenschichten (3) in dem Bereich von 30 bis 45 Gew.-% liegt, dadurch gekennzeichnet, daß
der Harzanteil der Zwischenschicht (7) im Bereich von 50 bis 60 Gew.-% liegt.

2. Lichtschutzlamelle, gebildet aus einem Laminat aus mindestens drei mit Kohlenstoffasern verstärkten Harzschichten, umfassend:
eine Zwischenschicht (7) aus einem Material, welches sich aus einem Grundmaterialharz (6) zusammensetzt, welches kurze Kohlenstoffasern (5) einhüllt, und
Oberflächenschichten (3) auf beiden Seiten der Zwischenschicht (7), von denen jede Oberflächenschicht (3) aus einem Material gefertigt ist, welches sich zusammensetzt aus einem Grundmaterialharz (2), welches unidirektional orientierte durchgehende Kohlenstoffasern (1) einhüllt, und der Harzanteil der Oberflächenschichten (3) im Bereich von 30 bis 45 Gew.-% liegt, dadurch gekennzeichnet, daß
die kurzen Kohlenstoffasern (5) der Zwischenschicht (7) unidirektional in einer Richtung orientiert sind, die im wesentlichen orthogonal zu der Richtung der Kohlenstoffasern (5) in den Oberflächenschichten (3) verläuft, und der Harzanteil der Zwischenschicht (7) im Bereich von 60 bis 75 Gew.-% liegt.

3. Verschlußlamelle (31; 39; 40; 41; 42), hergestellt aus einer Lichtschutzlamelle nach einem der vorhergehenden Ansprüche.

## Revendications

1. Lame de protection vis-à-vis de la lumière formée d'un stratifié comportant au moins trois couches de résine renforcée par des fibres de carbone, comprenant :
une couche intermédiaire (7) réalisée en un matériau constitué par une résine formant matrice (6) enveloppant des fibres de carbone continue à orientation unidirectionnelle (5), et
des couches superficielles (3) situées sur les deux faces de la couche intermédiaire (7), chacune desdites couches superficielles étant formée d'un matériau constitué par une résine formant matrice (2) enveloppant des fibres de carbone continues à orientation unidirectionnelle (1), les fibres (1) desdites couches superficielles (3) étant orientées dans une direction sensiblement perpendiculaire à la direction desdites fibres de carbone (5) dans ladite couche intermédiaire (7), et le contenu en résine desdites couches superficielles (3) étant situé dans la gamme de 30 à 45 % en poids, caractérisée en ce que
le contenu en résine de ladite couche intermédiaire (7) se situe dans la gamme de 50 à 60 % en poids.

2. Lame de protection vis-à-vis de la lumière formée d'un stratifié comportant au moins trois couches de résine renforcée par des fibres de carbone, comprenant :
une couche intermédiaire (7) formée d'un matériau constitué par une résine formant matrice (6) enveloppant de courtes fibres de carbone (5), et
des couches superficielles (3) situées sur les deux faces de ladite couche intermédiaire (7), chacune desdites couches superficielles (3) étant formée d'un matériau constitué par une résine formant matrice (2) enveloppant des fibres de carbone continues à orientation unidirectionnelle (1), le contenu en résine desdites couches superficielles (3) se situant dans la gamme de 30 à 45 % en poids,
caractérisée en ce que lesdites fibres de carbone courtes (5) de ladite couche intermédiaire (7) sont orientées de façon unidirectionnelle dans une direction sensiblement perpendiculaire à la direction desdites fibres de carbone (5) dans lesdites couches superficielles (3), et le contenu en résine de ladite couche intermédiaire (7) se situant dans la gamme de 60 à 75 % en poids.

3. Lame d'obturateur (31;39;40;41;42) formée d'une lame de protection vis-à-vis de la lumière selon l'une quelconque des revendications précédentes.
